# EUROPEAN PATENT SPECIFICATION

(11) **EP 0 338 772 B1**
(45) Date of publication and mention of the grant of the patent: **15.06.1994**
(21) Application number: 89303823.2
(22) Date of filing: 18.04.1989
(51) Int. Cl.: G21C 7/10

(54) **Nuclear reactor control rod with encapsulated neutron absorbent**
Kernreaktorregelstab mit gekapseltem Neutronenabsorber
Barre de contrôle de réacteur nucléaire avec absorbant de neutrons encapsulé

(30) Priority: 19.04.1988 US 183558
(43) Date of publication of application: 25.10.1989
(73) Proprietor: GENERAL ELECTRIC COMPANY, Schenectady, NY 12345 (US)
(72) Inventor: Charnley, James Edward, Gilroy California 95020 (US); Dixon, Robert Carl, Morgan Hill California 95037 (US)
(74) Representative: Pratt, Richard Wilson

(56) References cited:
- EP-A- 0 130 483
- EP-A- 0 296 954
- FR-A- 1 188 583
- US-A- 3 712 852

## Description

This invention relates to a control rod construction encapsulating the neutron absorbent for service in nuclear reactors having a core of fissionable fuel.

Commercial nuclear fission reactors for generating power normally comprise a core of fissionable fuel with the fuel material sealed within tube-like metal containers. These tubular containers with the fuel are arranged or grouped in discrete bundles or units, which frequently are enclosed within an open ended housing known as a "channel" in the nuclear fuel industry. The discrete fuel bundles are assembled for service within the nuclear reactor to provide the core in predetermined patterns. The assembled bundles are spaced apart from each other so as to provide intermediate gaps between each bundle, forming a surrounding area for the flow of coolant thereabout and also the insertion of reactor control means comprising neutron absorbing material.

Nuclear reactor control means typically consist of components containing neutron absorbing compositions which are reciprocally moveable in relation to the core body of neutron emitting fuel undergoing fission. The rate of the fission reaction, and in turn heat generated, is regulated by governing the availability of fission produced neutrons for furthering the fission reaction and determining its magnitude.

In a conventional nuclear reactor, fissionable atoms such as uranium isotopes and plutonium absorb neutrons in their nuclei and undergo a nuclear disintegration or splitting. This fission produces on the average of two products of lower atomic weight and greater kinetic energy, and typically two or three neutrons, also of high energy.

The fission neutrons thus produced diffuse through the core containing fissionable fuel and they are either utilized or lost in several distinct competing mechanisms. Some neutrons may migrate to the boundaries of the core and escape whereby they are lost from the system. Some neutrons undergo nonfission or radiative capture in the fuel material. Other neutrons undergo fission capture within the fissionable fuel and thereby produce additional fission neutrons, the so-called chain reaction. Namely, fast neutrons are captured in the uranium 235 and 238. Still other neutrons are captured in uranium 235. Still other neutrons undergo parasitic capture in the various extraneous or nonfissionable compositions of the core and adjoining components such as the moderator, coolant, various structural materials, fission products produced within the fuel, as well as the reactor control elements.

The balance between the production of neutrons and the various competing mechanisms for neutron consumption determine whether the fission reaction is self-sustaining, decreasing, or increasing. When the fission reaction is self-sustaining, the neutron multiplication factor equals 1.00, the neutron population remains constant, and on the average there is one neutron remaining from each fission event which induces a subsequent fission of an atom, and so on.

Heat produced by the fission reactions is thereby continuous and is maintained as long as sufficient fissionable material is present in the fuel system to override the effects of fission products formed by the reaction, some of which have a high capacity for absorbing neutrons. The heat produced by the fission reactions is removed by a coolant such as water, circulating through the core in contact with the tubular containers of fuel and conveyed on to means for its utilization, such as the generation of electrical power.

The neutron population, and in turn the heat or power produced, of a nuclear reactor, depends on the extent to which neutrons are consumed or wasted by capture in nonfissionable material. Neutron consumption of this nature is regulated by governing the relative amount of neutron absorbing control material imposed into the core of fissionable fuel undergoing fission reactions.

Control devices comprising elements containing neutron absorbing material, are commonly provided in the form of rods, sheets or blades. The elements are provided with mechanical or fluid operating means for reciprocal movement into and out from the core of fissionable fuel to any appropriate extent or depth for achieving the desired neutron population, and in turn, level of reaction.

Common neutron absorbing materials include elemental or compound forms of boron, cadmium, gadolinium, europium, erbium, samarium, hafnium, dysprosium, silver and mercury.

Commercial nuclear reactors for power generation are of such a magnitude that the control means, or systems, comprise a plurality of control units or rods. Each individual control unit or rod is selectively and reciprocally insertable to variable degrees of penetration into the fuel core by movement intermediate the discrete bundles of grouped tubular fuel containers through the spaces or gaps provided in the assembly of multiple fuel bundles. A common design for control rods, as shown in U.S. Patent US-A-3,020,888, consists of an element having four blades, comprising sheaths containing neutron absorbing material, having a cross or cruciform cross-section, whereby the four blades radially project at right angles to each other. With this design configuration, each control rod element is insertable into the spaces between adjacent fuel bundles of the core assembly, and regulates the neutron flux or density emitting from the fissioning fuel of the four bundles.

The construction designs, materials, operating mechanisms and functions of typical control means for water cooled and moderated nuclear fission reactors for commercial power generations are illustrated and described in detail in the prior art, for example, U.S. Patents No. 3,020,781; No. 3,020,888; No. 3,217,307; No. 3,395,781; No. 3,397,759; No. 4,285,749; No. 4,624,826; and No. 4,676,948, and elsewhere throughout the literature dealing with nuclear reactors. The contents of the foregoing prior art patents are incorporated herein by reference.

EP-A-0130483 relates to a control rod for a nuclear reactor in which neutron absorbing rods are surrounded by a second neutron absorber which differs in material from the neutron absorbing rod for prolonging the life of the control rod. However, the disclosure is not concerned with the problems of particular neutron absorbing material.

FR-A-1188583 relates to neutron absorbing elements comprising a tubular sheath resistant to creep and corrosion which enclose neutron absorbing material in modular capsule form or in the form of cylindrical fritted pellets. These capsules are intended to replace rigid bars of absorbent material in order to overcome problems of mechanical weakness.

In contrast, the present invention provides a control device for a nuclear fission reactor having a core of fissionable fuel in an assembly composed of fuel units grouped into spaced apart bundles which are immersed in liquid coolant in operating service, and wherein said control device is provided with means for reciprocal movement into and out from the core of fuel intermediate the spaced apart bundles of the assembly, said control device having a frame including an upper and a lower support member connected by an elongated spine support and at least one sheath extending from the upper to the lower support and longitudinally adjoining the spine support, each sheath containing therein a plurality of parallel hollow tubes aligned generally axially with the spine support, and extending substantially from the upper to the lower support member, characterized by said hollow tubes being sealed and enclosing a multiplicity of closed canisters having closing caps stacked end on end in a column and containing therein particulate boron carbide.

This invention comprises an improved control device for nuclear fission reactors comprising a particulate neutron absorbent material encapsulated in a plurality of individual canisters for service in water cooled and moderated nuclear fission reactors.

In the accompanying drawings:
Figure 1 is a perspective view of a control device with part cut away;
Figure 2 is a cross sectional view of a hollow tube enclosing stacked canisters for neutron absorbent material;
Figure 3 is a plain view of a canister with part broken away;
Figure 4 is a top view of a tube in cross section with a canister showing a closing cap with optional vents;
Figure 5 is a cross section view of a variation of the canister unit of this invention; and
Figure 6 is a transverse view of a blade of a different arrangement of a control element.

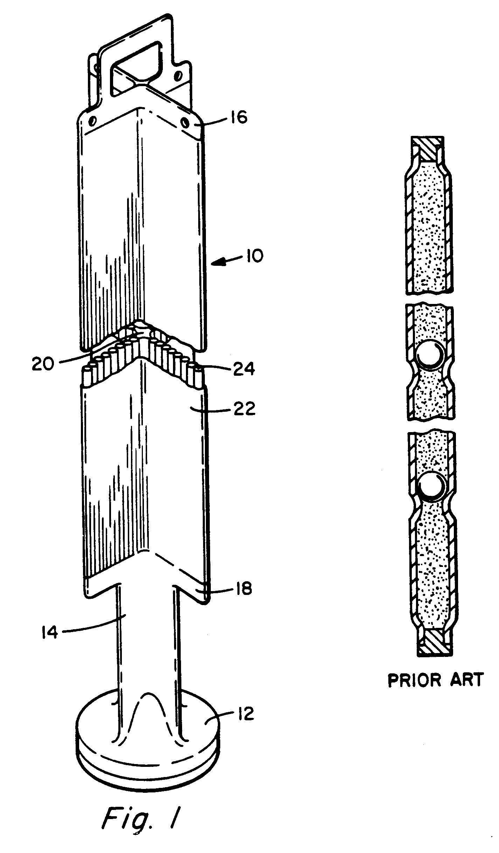

Referring to Figure 1 of the drawings, this invention is hereinafter described and illustrated in part with reference to a common commercial design for nuclear fission reactor control devices wherein the control elements are generally cruciform in cross section, and the preferred embodiment. Control devices with cruciform control elements and their utilization with fuel core assemblies are shown and described in the prior art comprising the above cited U.S. Patents.

Control device 10 comprises a base 12 which is coupled to a suitable control device drive mechanism (not shown) and supports a frame 14 including an upper support member 16 and a lower support member 18 and, in the prior art design, an elongated control spine support 20, or tie rod, connecting said upper and lower support members 16 and 18. Upper support member 16 can also function as a handle to facilitate transportation and manipulation of the device. In the preferred cruciform embodiment of this invention, the upper and lower support members 16 and 18, respectively, each comprise four radially extending arms projecting at about 90 degrees with respect to adjacent arms to form the cross. Central spine support 20, connecting the upper and lower support members 16 and 18, is preferably also of a cruciform configuration with four abbreviated arms of relatively short radial extension in relation to the arms projecting from the upper and lower support members 16 and 18.

The four radially extending arms projecting from the upper and lower support member 16 and 18, and the four abbreviated radial arms of the central support 20, are each respectively aligned, in plan, with their counterparts to provide a cross configuration. The four arms of the upper and lower support members 16 and 18 are also substantially conterminous with respect to each other.

A metal sheath 22 extends from each arm of the upper support 16 to each respective counterpart arm of the lower support 18 and adjoins the central elongated spine support 20 along its length. Sheath 22 typically comprises a U-shaped sheet metal housing of blade-like configuration and an internal width comparable to the thickness of the arms of the upper and lower supports. Preferably, each sheath is secured to its respective adjoining arms of the upper and lower support members 16 and 18, and also to the central support 20, by suitable means such as welding.

The foregoing structure of the control device of this invention is typical of common commercial control means in service for operating nuclear reactors. The structure of the foregoing frame 14 and its components are normally constructed of stainless steel or similar corrosion resisting metals.

In accordance with this invention, the neutron absorbing material of the control device element is encapsulated within a plurality of closed canisters. The canister encapsulation system is especially suitable and advantageous in nuclear reactor control devices utilizing particulate neutron absorbent material such as the commonly employed boron carbide powder or pellets, or particulate rare earth oxides.

Moreover, the canister encapsulation construction of the preferred embodiment of this invention is fully compatible with and adaptable to the foregoing described structure for control devices which are in service in many commercial nuclear fission reactors, as well as useful in additional embodiments described hereinafter.

Referring again to Figure 1 and the illustration of a conventional prior art system, a multiplicity of tubes 24 sealed with end plugs are utilized to contain neutron absorbent material in particulate form, such as powdered boron carbide, within the control device element. However, complex and cumbersome measures are required in this prior art system to retain loose powders in position and at effective densities, such as for example the series of spaced balls and dimples shown and illustrated in the prior art patents cited. Also, this powder containing tube with interposed balls and dimples of the prior art entails involved and costly production and assembly operations which are difficult to control and maintain standards, along with concern for the possible structural debilitation due to the dimpling.

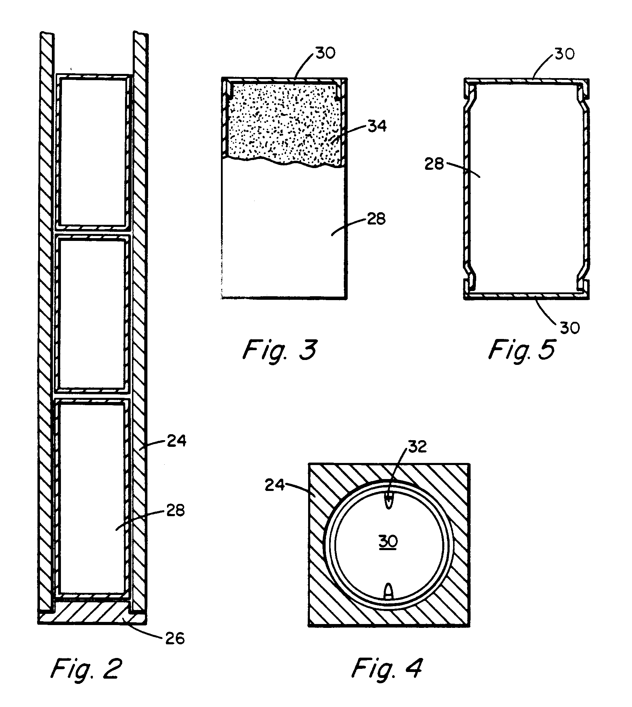

Referring now to FIGURE 2, a plurality of canisters 28 is utilized to retain the particulate neutron absorbing material such as powdered boron carbide, and the canisters 28 with their contents are stacked end to end in a column within the tubes 24 which are subsequently sealed with end plugs 26. Tubes 24 can be the same as utilized in the prior art, without dimpling, or of any suitable dimensions or configuration design for a specific application, including hollow cylinder or angular shapes, such as square or rectangular, in cross-section configurations. Preferably, the tubes 24 are of relatively enduring and breach resistance structure such as provided by high strength material and/or comparatively massive or thick wall dimensions whereby isolation of the neutron absorbent material, and any products of subsequent irradiation derived from the material, is insured.

The particulate neutron absorbent material encapsulating canister 28 can be of any suitable configuration, angular such as square, but preferably is cylindrical in cross-section. The canisters 28 are constructed of thin walls of an apt metal since the stronger tubes 24 provide adequate isolation and resistance to breaching. The use of thin walls for the canister construction also enable the absorbent material to expand with the canister without stressing the tube 24 or inducing stress corrosion.

Canisters 28, after introduction of the particulate neutron absorbent 34, are provided with an end cap 30 to close off its open end or ends as shown in Figure 2 and 3. The canister 28 can be provided with one or more orifice vents 32, preferably in the closing end cap 30 for the passage of any gases generated into or out from the canister to equalize pressures, as shown in Figure 4. The venting orifice(s) preferably is of a size smaller than the particle of the absorbent material so as to preclude their inadvertent escape from the canister. The vent need not be an orifice since it can be threads or other interlocking mechanical arrangements.

One or more canisters of each column within a tube 24 can be devoid of or partially filled with neutron absorbent material so as to provide a plenum space for retention of gases produced by irradiation.

As shown in Figure 2, the canister 28 can be of variable dimensions or contents capacity whereby the system is especially versatile in providing for a multiplicity of different arrangements for applying neutron absorbent materials either alone or in combination with other materials. For practical reasons the canisters are employed in lengths of about 150-600mm (6-24 inches). Moreover, the utilization of canisters for neutron absorbent encapsulation facilitates production and assembly, including enhanced measurement and control of densification.

Upon encapsulation of an apt quantity of neutron absorbent material in a desired density within a canister 28 and closing it with a cap 30, a plurality of such filled and closed canisters 28, for example up to about 24 individual canisters, can be assembled within a tube 24 by stacking end on end in a column as shown in Figure 2. Typically, about 3 to 12 canisters per tube are used. The tube 24 is then sealed with end plugs 26. With this system the quantities and/or types of neutron absorbent material can be varied and applied in any number of patterns.

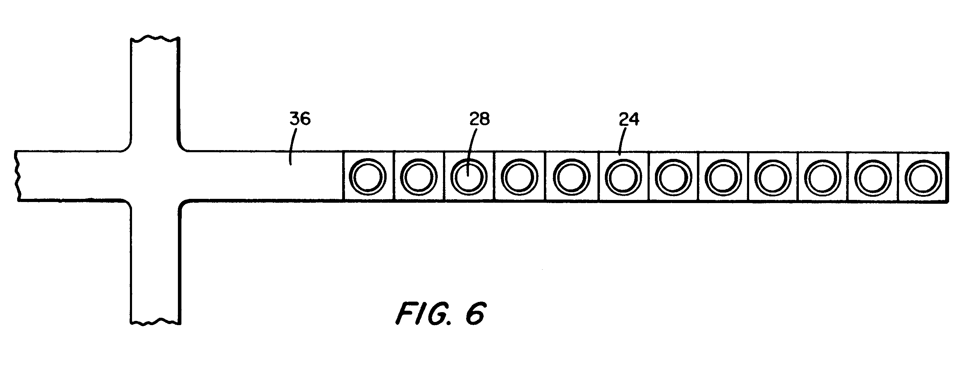

One embodiment for the practice of this invention comprises the use of hollow tubes 24 elongated members having a generally angular cross section configuration, such as square as shown in Figures 4 and 6, with a longitudinal cavity of cylindrical internal cross section extending the length thereof. The cylindrical cavity receives a plurality of cylindrical canisters 28 containing absorbent, stacked therein end to end in a column.

Externally generally square tubes 24 provide for ease of affixing each tube with its adjoining parallel tube units, such as by welding, to form a substantially continuous monolithic body of joined tubes. This joining of the aligned parallel tubes 24 into a single monolithic body provides an integrated blade-like member of the cruciform control element which may dispense with any need for the sheath 22 and other components.

The ends of the square tubes 24 can be affixed, such as by welding, to each of the upper support member 16 and the corresponding lower support member 18. This arrangement substantially simplifies the overall control device element since it enables the elimination of the need of both the sheath 22 and the control elongated spine support 20 since the joined tubes 24 perform the function of each.

However, it is preferred that when the central spine support 20 is excluded in this embodiment, it is replaced by several spacers 36 of comparable cruciform configuration arranged at intervals to provide ample structural rigidity and strength (FIGURE 6).

There has been provided, for a control device for nuclear fission reactors, a novel construction and system that enable improved control of the density of particulate neutron absorbent material and permit simplified construction, manufacture and assembly including enabling preassembly of components and versatility for customizing. The construction accommodates expansion of the particulate neutron absorbent material without over-stressing or promoting stress corrosion in the retaining structure: it isolates the particulate neutron absorbent material, thereby permitting its use in commercial purity grades rather than costly special high purity materials, and eliminates the marginally effective prior structure of balls and dimples while positively preventing vertical migration or settling of the particulate neutron absorbent.

## Claims

1. A control device (10) for a nuclear fission reactor having a core of fissionable fuel in an assembly composed of fuel units grouped into spaced apart bundles which are immersed in liquid coolant in operating service, and wherein said control device is provided with means for reciprocal movement into and out from the core of fuel intermediate the spaced apart bundles of the assembly, said control device having a frame including an upper (16) and a lower support member (18) connected by an elongated spine support (20) and at least one sheath (22) extending from the upper to the lower support and longitudinally adjoining the spine support, each sheath containing therein a plurality of parallel hollow tubes (24) aligned generally axially with the spine support, and extending substantially from the upper to the lower support member, characterized by said hollow tubes being sealed (26) and enclosing a multiplicity of closed canisters (28) having closing caps (30) stacked end on end in a column and containing therein particulate boron carbide (34).

2. A control device as in claim 1, wherein the plurality of hollow tubes are cylindrical in cross-section.

3. A control device as in claim 1 or 2, wherein the canisters (28), stacked end to end in a column and enclosed within a hollow tube (24), are cylindrical in cross-section.

4. A control device as in any preceding claim wherein the plurality of hollow tubes (24) are substantially square in cross-section.

5. A control device as in any preceding claim, wherein at least canisters containing the neutron absorbing material are provided with venting orifices.

## Patentansprüche

1. Regelgerät (10) für einen Kernspaltungsreaktor, der einen Kern aus spaltbarem Brennstoff in einer Baueinheit aufweist, die aus Brennstoffeinheiten zusammengesetzt ist, die in beabstandeten Bündeln gruppiert sind, die während des Betriebes in ein flüssiges Kühlmittel eingetaucht sind und worin das Regelgerät mit einer Einrichtung zur reziproken Bewegung in den und aus dem Brennstoffkern zwischen den beabstandeten Bündeln der Baueinheit versehen ist, wobei das Regelgerät einen Rahmen mit einem oberen (16) und einem unteren Trägerteil (18) aufweist, die durch einen langgestreckten Stabträger (20) und mindestens eine Hülle (22) verbunden sind, die sich vom oberen zum unteren Träger erstreckt und dem Stabträger längs benachbart liegt, wobei jede Hülle eine Vielzahl paralleler hohler Rohre (24) enthält, die allgemein axial mit dem Stabträger ausgerichtet sind und sich im wesentlichen vom oberen zum unteren Trägerteil erstrekken, dadurch gekennzeichnet, daß
die hohlen Rohre abgedichtet (26) sind und eine Vielzahl von geschlossenen Kanistern (28) einschließen, die Verschlußkappen (30) aufweisen und Ende auf Ende in einer Säule gestapelt sind und teilchenförmiges Borcarbid (34) enthalten.

2. Regelgerät nach Anspruch 1, worin die Vielzahl hohler Rohre einen zylindrischen Querschnitt hat.

3. Regelgerät nach Anspruch 1 oder 2, worin die Kanister (28), die Ende an Ende in einer Säule übereinander gestapelt und innerhalb eines hohlen Rohres (24) eingeschlossen sind, einen zylindrischen Querschnitt haben.

4. Regelgerät nach einem vorhergehenden Anspruch, worin die Vielzahl hohler Rohre (24) einen im wesentlichen quadratischen Querschnitt hat.

5. Regelgerät nach einem vorhergehenden Anspruch, worin mindestens Kanister, die das Neutronen absorbierende Material enthalten, mit Entlüftungsöffnungen versehen sind.

## Revendications

1. Dispositif de commande (10) pour un réacteur à fission nucléaire comprenant un coeur de combustible fissible dans un assemblage composé d'unités de combustible regroupées en des faisceaux espacés qui sont immergés dans un caloporteur liquide en cours de fonctionnement, et dans lequel ledit dispositif de commande est muni d'un moyen de déplacement en va-et-vient dans et hors du coeur de combustible, entre les faisceaux espacés de l'assemblage, ledit dispositif de commande comprenant une structure qui comprend des éléments de support supérieur (16) et inférieur (18) reliés par un support spinal (20) allongé et au moins une gaine (22) qui s'étend du support supérieur au support inférieur et qui rejoint longitudinalement le support spinal, chaque gaine contenant une pluralité de tubes creux (24) parallèles, alignés généralement axialement avec le support spinal et s'étendant sensiblement de l'élément de support supérieur jusqu'à l'élément de support inférieur, caractérisé par le fait que lesdits tubes creux sont scellés (26) et renferment une multiplicité de paniers fermés (28) avec des coiffes de fermeture (30), empilés bout-à-bout dans une colonne et contenant du carbure de bore particulaire (34).

2. Dispositif de commande selon la revendication 1, dans lequel les tubes creux de ladite pluralité ont une section cylindrique.

3. Dispositif de commande selon la revendication 1 ou 2, dans lequel les paniers (28) empilés bout-à-bout dans une colonne et enfermés à l'intérieur d'un tube creux (24) ont une section cylindrique.

4. Dispositif de commande selon l'une quelconque des précédentes revendications, dans lequel les tubes creux (24) de ladite pluralité ont une section sensiblement carrée.

5. Dispositif de commande selon l'une quelconque des précédentes revendications, dans lequel certains paniers au moins qui contiennent le matériau absorbeur de neutrons sont pourvus d'orifices de ventilation.
